Europäisches Patentamt

**European Patent Office**

**Office européen des brevets**

(19)

(11) Publication number:

**0 252 045**
**A2**

## EUROPEAN PATENT APPLICATION

(12)

(21) Application number: **87850194.9**

(22) Date of filing: **15.06.87**

(51) Int. Cl.³: **F 16 C 39/04**

(30) Priority: **30.06.86 US 879970**

(43) Date of publication of application:
**07.01.88 Bulletin 88/1**

(84) Designated Contracting States:
**BE CH DE FR GB IT LI SE**

(71) Applicant: **Atlas Copco Aktiebolag**
**Nacka**
**S-105 23 Stockholm(SE)**

(72) Inventor: **Pennink, Hans**
**18 Twinbrook Court**
**Clifton Park, NY 12065(US)**

(74) Representative: **Grundfelt, Gunnar et al,**
**c/o Atlas Copco MCT AB Patent Department**
**S-104 84 Stockholm(SE)**

(54) **Thrust monitoring and balancing apparatus.**

(57) Apparatus for monitoring and balancing the axial load on the rotor assembly (12) of a rotating machine. The apparatus comprises an adjustable balancing means (45) for applying a controlled axial force on the rotor assembly, a flow circuit (53 or 54) for applying a pressurized fluid against a surface (41 or 42) on the rotor assembly whereby the back pressure in the circuit varies in response to variations in the axial load, sensor means (66 or 67) for determining the back pressure in the circuit, and means (65) responsive to the sensor means for automatically adjusting the balancing means to maintain the back pressure at a given value.

EP 0 252 045 A2

FIG. 1

# Thrust Monitoring and Balancing Apparatus

## Background of the Invention

This invention relates to monitoring the axial loading upon the rotor assembly of a rotating machine and automatically adjusting the load to maintain the axial forces in a balanced condition while the machine is operating.

The term "rotating machine" as herein used shall include centrifugal compressors, pumps, turbines, turbo-expanders, and the like which contain a rotor assembly that is subjected to varying axial loads. Although rotor assemblies of this type generally contain a pair of opposed thrust bearings that are designed to resist axial forces, it has been found that the thrust bearings alone cannot completely absorb the entire incurred load acting upon the structure, unless very high power losses are incurred and the load may become unbalanced to a point where it will adversely effect the operation and efficiency of the machine. As described in United States patents 3,828,160 and 3,895,689, which were issued to Swearingen, most thrust bearings typically involve a stationary component secured in the machine casing and a rotating or moving component that is secured to the rotor shaft. A lubricant is introduced in the space separating the two components so that a hydrodynamic film or wedge is established in the space which resists axial shifting of the rotor structure and prevents the bearing components from rubbing.

As disclosed by Swearingen in the noted patents, a balancing drum is mounted in the machine casing immediately adjacent to a radially disposed surface on an impeller wheel.

The drum involves a chamber that is closed against the wheel by means of labyrinth seals. High pressure working fluid from the machine is allowed to enter the chamber and thus exert an axially directed force on the rotor structure. The amount of force exerted by the fluid is controlled by bleeding the fluid from the chamber at a desired rate. This is achieved by means of a bleed line having an adjustable control valve positioned thereon. Pressure taps are positioned in the thrust bearings to sense differences in the hydrodynamic wedge pressure. In the event the axial load on the rotor becomes unbalanced, the wedge pressure in one bearing will increase while that in the opposing bearing will decrease. By adjusting the position of the control valve, the pressure in the chamber can be brought to a level to offset the unbalancing load and thereby bring the thrust balance back into a desired operating range.

The Swearingen system works quite well when the rotor assembly is turning at operational speeds at which the hydrodynamic film in the thrust bearings is well established. However, before start up or when the rotor is turning at low speeds, the system cannot provide any useful information concerning the position of the rotor or the thrust on the rotor. Furthermore, even at operational speeds, the system is effected adversely by any problems relating to the thrust bearing. For example, uneven or excessive heating of one or both bearings can produce erroneous pressure tap readings. Partial blockage in any of the lubricating lines servicing the bearing can also adversely effect the operation of the balancing system. Improper bearing mounting or alignment will also introduce uncontrollable and difficult to detect errors into the system. Finally, because of the overall complexity of most thrust bearing systems and the associated lubricating equipment many other problems relating to the bearings may occur which can adversely effect the operation of the balancing system.

Objects and Summary of the Invention

It is therefore an object of the present invention to improve apparatus for monitoring and automatically balancing the rotor structure of a rotating machine to compensate for varying axial loads.

A still further object of the present invention is to eliminate the need of using thrust bearing pressure measurements to determine unbalanced conditions in a rotor assembly.

Another object of the present invention is to provide a fully automatic system for balancing the axial loading on the rotor structure of a rotating machine while the machine is operating.

Yet another object of the present invention is to eliminate uncontrollable variables from a rotor thrust measuring and balancing system which might adversely effect measurement readings.

A still other object of the present invention is to determine rotor thrust load and/or position at standstill and utilize the measurement to control "lift off" by means of hydraulic piston action on the rotor.

These and other objects of the present invention are attained through measuring and balancing apparatus that includes an adjustable balancing mechanism acting upon the rotor assembly of a rotating machine, at least one surface or groove on the

-3-

rotor structure, a source of pressurized fluid, a flow circuit for applying the pressurized fluid to the surface or groove whereby the back pressure in the circuit is at a desired level when the axial loading on the rotor assembly is balanced, a sensor for detecting the back pressure within the flow circuit and a control mechanism responsive to the sensor for automatically adjusting the balancing mechanism to maintain the back pressure in the circuit at the desired level thereby holding the axial loading on the rotor within balanced conditions.

In a second embodiment of the invention, a flange having two opposed radially extended surfaces is connected to the rotor for movement therewith. A pair of flow circuits are arranged to apply pressurized fluid against both surfaces so that the back pressures in the circuits are equal when the axial forces acting on the rotor are balanced. A sensor is arranged to detect differences in the circuit pressures and automatically adjusts the balancing mechanism until the pressures are brought to equilibrium.

Brief Description of the Drawing

For a better understanding of these and other objects of the present invention, reference is had to the following detailed description of the invention which is to be read in conjunction with the accompanying drawing, wherein:

Fig. 1 is a partial side elevation in section of a centrifugal machine embodying the monitoring and load balancing system of the present invention;

Fig. 2 is an enlarged diagrammatical view of a servo-amplifer used in the control section of the centrifugal

-4-

blades are arranged to establish restricted flow passages therebetween which turn incoming fluid in a generally radial direction and compress the fluid to a higher pressure. The compressed fluid is discharged from the tips of the blades into the diffuser section generally depicted at 22. The diffuser surrounds the impeller wheel and functions to direct discharged fluid into a toroidal-shaped volute 23 which conducts the fluid out of the machine. Inlet guide vanes 21-21 are adjustably positioned at the entrance to the impeller for controlling the inflow of working fluid into the machine.

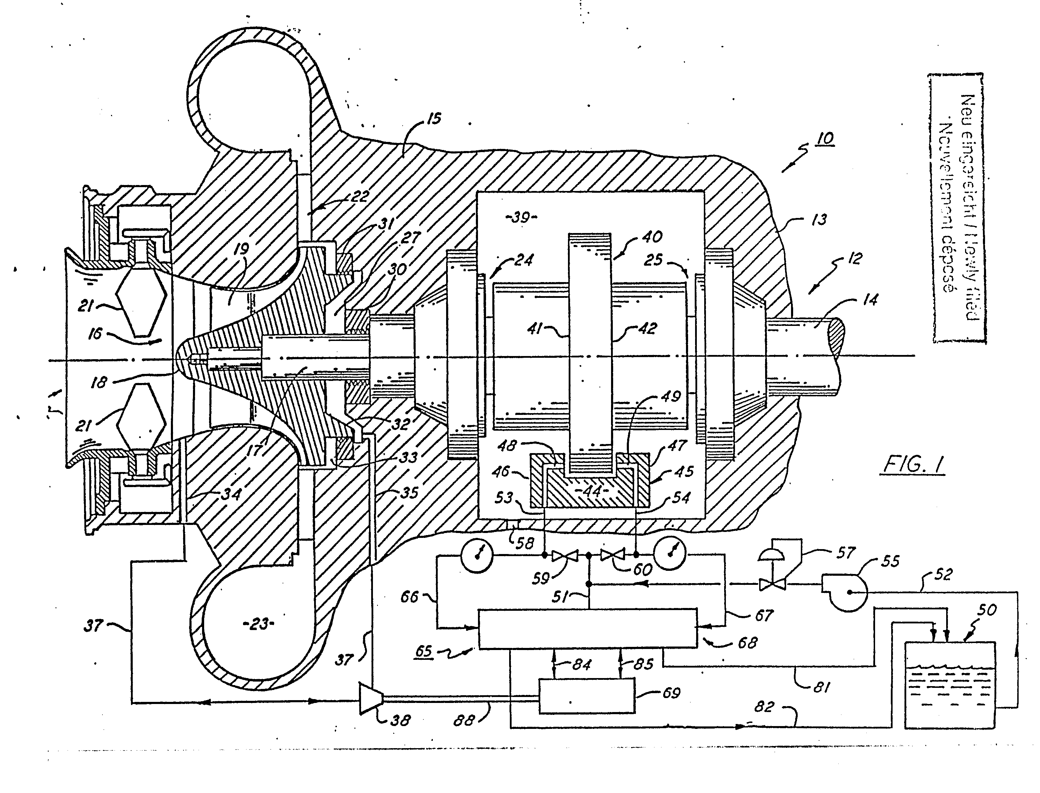

The general construction of a centrifugal compressor is well known in the art and, for this reason, the structure of the machine is shown in a somewhat simplified or schematic form in Fig. 1. The machine is meant to be merely illustrative of many types of rotating machines and not meant to limit the disclosure in any way. The rotor assembly 12 includes a pair of conventional thrust bearings 24 and 25 that help support the structure to some extent by resisting axial loading. The loading can at times exceed the bearing capacity whereupon the rotor structure will move slightly in an axial direction in response to the unbalanced load. As explained in the noted Swearingen patents, an adjustable balancing drum is oftentimes used to offset the unbalancing force acting on the rotor structure.

As illustrated in Fig. 1, a balancing chamber 27 is provided in the front face 16 of the machine casing adjacent to the back wall 28 of the impeller wheel. One end of the chamber is closed by a labyrinth seal 30 that acts against the rotor shaft 14. The other end of the chamber is similarly closed by a second labyrinth seal 31 that acts upon annular shoulder 32 machine illustrated in Fig. 1 further showing the servo-amplifier in a neutral position;

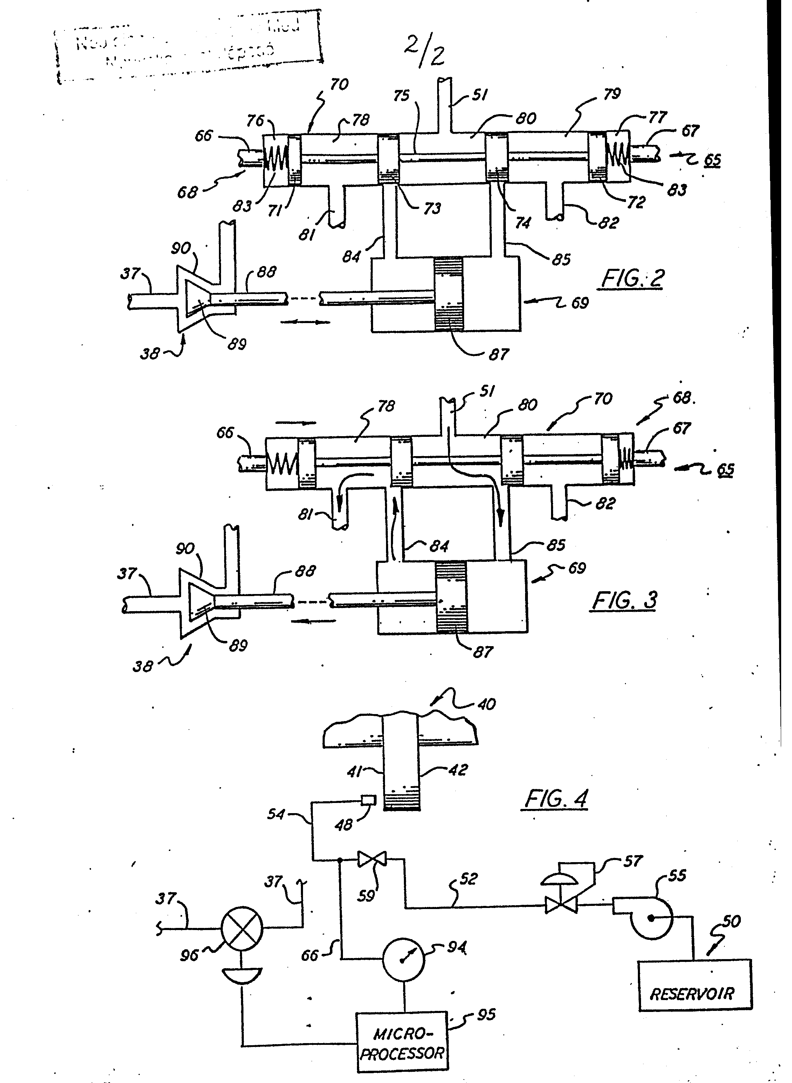

Fig. 3 is a view similar to that shown in Fig. 2 illustrating the servo-amplifier moved to an operative position for adjusting the balancing forces acting on the rotor structrue of the centrifugal machine; and

Fig. 4 is a partial view showing a second balancing control unit suitable for use in the practice of the present invention.


## Description of the Invention

Referring initially to Fig. 1, there is shown a rotating machine, generally referenced 10, which in this case is a centrifugal compressor used to raise the pressure of a working fluid which enters the machine through an axially aligned inlet 11. Although the present invention will be described with specific reference to a centrifugal compressor, it should become apparent to one skilled in the art that the invention can be employed in similar types of rotating machines such as centrifugal pumps, turbines, turbo-expanders and the like. The machine includes a rotor assembly 12 that is rotatably supported within the machine casing 13 by suitable bearings and seals, some of which have been omitted from the drawings for the sake of clarity.

A rotor shaft 14 is mounted along the horizontal axis of the machine and passes through the front face 15 of the casing 13. An impeller wheel 16 is secured to the front end 17 of the shaft by any suitable means. The impeller further includes a hub 18 that supports a series of spaced apart blades 20-20. The formed in the back wall of the impeller wheel. A portion of the high pressure fluid leaving the tip of the impeller is permitted to move through seal 31 into the balancing chamber via passage 33 to exert an axial force on the back of the wheel and thus on the rotor structure. The pressurized fluid in the chamber is returned to the suction or inlet side of the impeller via bleed line 37 and channels 34 and 35 formed in the machine casing. An adjustable control valve 38 is operatively attached to the bleed line and, as will be explained in greater detail below, serves to regulate the flow of fluid back to the compressor inlet to regulate the pressure in the balance chamber, which in turn controls the force exerted by the working fluid upon the rotor structure. Any other similar balancing piston for accomplishing the same results as known and used in the art may be simlarly employed without departing from the teachings of the present invention.

The mid-section of the rotor shaft is situated in a bearing chamber 39 and is provided with a radially disposed flange 40 having a pair of flat parallel end faces 41 and 42. A U-shaped gaging block 45 is positioned adjacent to the outer periphery of the flange and includes vertically extended arms 46 and 47. The arms extend upwardly from base 44 adjacent to and in close proximity with the opposed end face on the flange. Flow circuits 53 and 54 are partially contained within the block. The circuits are connected to a common feed line 51 and serve to apply a high pressure fluid against end faces 41 and 42 of the flange 40. Discharge channels 48 and 49, which form part of the two flow circuits, are provided in the upraised arms of the gauge block and are arranged to direct the high pressure fluid against the opposed end faces of the flange. The gauge block is secured to the machine casing and, although not shown, can be adjusted to locate the discharge end of each circuit the same distance from the adjacent end face of the flange. Identical flow restrictors 59 and 60 are placed in each flow circuit to insure that fluid entering each circuit is at the same level.

A fluid reservoir 50 is connected to the feed line 51 by a supply line 52. A pump 55 and a pressure regulator 57 are operatively connected to line 52 and function to deliver fluid from the reservoir to the flow circuits at a predetermined pressure and rate. High pressure fluid used to service the two flow circuits may be drawn from the same system used to supply the thrust bearings and/or other lubricated machine components or, as here, can be supplied from an independent system. The fluid collected in the bearing chamber 39 is returned to the reservoir by means of a drain opening 59 and suitable return lines (not shown).

The discharge end of each flow circuit is located in close proximity with one of the end faces whereby the flange acts as a restriction in the flow path to produce a back pressure in the circuit. With the flange centered in the gauge block and the pressure inflow to each circuit set at the same level, the back pressure in the flow circuits will be equal. Accordingly, when the axial forces acting on the rotor are balanced, the back pressure in the circuits will remain equal. Any appreciable unbalancing of the axial forces, however, will tend to move the rotor axial in response to the direction of the unbalancing force. Any slight movement of the rotor produces a discernable change in the back pressure of each circuit. As the flange moves closer to the discharge end of one circuit, the back pressure in that circuit will increase while at the same time the opposing circuit will experience a corresponding reduction in pressure.

Back pressure data concerning each circuit is transmitted to a servo-amplifier, generally depicted at 65, by means of pressure sensing lines 66 and 67. The servo-amplifier includes a pilot valve unit 68 and a coacting drive cylinder 69 that is used to automatically position the bleed line control valve 38 to adjust the pressure in balancing chamber 30.

Turning now more specifically to Figs. 2 and 3, the operation of the servo-amplifier 65 will be explained in greater detail. The pilot valve 68 is shown in a neutral position in Fig. 2 indicating that the back pressures experienced by the two sensor lines are equal and thus the axial thrust acting on the rotor assembly is balanced. The pilot valve includes a cylindrical housing 70 that slidably contains a pilot piston assembly that contains two outer pistons 71 and 72, and two inner pistons 73 and 74. All the pistons in the pilot piston assembly are locked together by a centrally located tie rod 75 so that they are able to slide in unison axially within the housing without changing their relative positions.

The pilot piston assembly divides the cylinder into five individual compartments that include two end compartments 76 and 77, two intermediate compartments 78 and 79, and a central compartment 80. High pressure fluid from pump 55 (Fig. 1) is delivered into the central compartment 80 via feed line 51. The two intermediate compartments are arranged to empty directly into fluid drain lines 81 and 82 which conduct fluid from these compartments directly back to the reservoir 50. Back pressure

-9-

sensing lines 66 and 67 enter directly into the two end compartments 76 and 77, respectively, through opposing end walls of the housing. Springs 83-83 are located in each end compartment and act upon the piston assembly to normally hold the assembly in the neutral position as shown in Fig. 2. A pair of connecting lines 84 and 85 operatively connect the power cylinder to the pilot valve. When the pilot valve is in a neutral position, the two inner pistons 73 and 74 close off the connecting lines thus shutting off the flow of fluid between the pilot valve and the power cylinder.

A power piston 87 is slidably mounted within the power cylinder and is operatively connected to the balancing chamber control valve 38 by means of piston rod 88. The control valve 38, in this embodiment of the invention, is a plug valve having a tapered plunger 89 connected to rod 88. The plunger coacts with a tapered valve seat 90 to regulate the flow of working substance passing from the balancing chamber back to the inlet region of the rotating machine. By adjusting the position of the plunger, the pressure of the working fluid in the chamber, can be controlled to apply a controlled balancing force on the rotor structure.

When the rotor is turning under balanced conditions, the power cylinder is isolated from the pilot valve and the control valve will remain in a set position. If the rotor becomes unbalanced, however, the back pressure in the flow circuits will become similarly unbalanced. This produces greater pressure acting upon one side of the pilot valve piston assembly causing the assembly to move axially in response to the pressure. As will

-10-

be explained below this permits high pressure fluid stored in center compartment 80 to flow into the power cylinder to adjust the positioning of the control valve.

In Fig. 3, the pilot valve piston assembly is shown displaced to the right indicating that an unbalancing force is acting on the rotor assembly tending to move the assembly to the left as viewed in Fig. 1. At this time, connecting lines 84 and 85 are both opened. Line 85 allows high pressure fluid to flow into the drive cylinder behind power piston 87 thus driving the piston to the left. Fluid contained in the cylinder in front of the piston is simultaneously forced via connecting line 84 through intermediate compartment 78 into drain line 81 for return to the reservoir. Movement of the power piston automatically causes the control valve 38 to be repositioned. Although the control valve may be of any suitable type, the valve as illustrated in this particular embodiment of the invention is a plug valve which includes a tapered plunger 89 that is adapted to coact with a complementary valve seat 90 to regulate the flow of working fluid through the valve. The plunger is connected to the piston rod 88 so that it moves in response to the displacement of the power piston.

As can be seen, displacing the piston to the left as indicated in Fig. 3 causes the control valve to be moved to a more fully opened condition. This, in turn, relieves the pressure behind the impeller wheel thus alleviating the unbalanced condition. When the axial load acting on the rotor assembly is again balanced, the pilot valve returns to a neutral position and will remain in this position until further corrections are called for. It should be evident from the

-11-

disclosure above that any unbalancing forces acting in the opposite direction will cause the piston assembly of the pilot valve to move in the opposite direction thus applying high pressure fluid to the front of the power piston. This will cause the control valve 37 to be moved to a more fully closed position thereby allowing pressure to increase in the balancing chamber again balancing the load on the rotor structure.

As can be seen from the disclosure above, the present balancing system has the ability to almost instantaneously sense changes in the axial loading on the rotor assembly and automatically take appropriate corrective action to bring the axial loading back into a balanced condition. The system operates independently of the thrust bearing and thus is not adversely effected by bearing related problems as are other balancing systems found in the prior art. As should now be apparent the present system also has the ability to determine the rotor thrust load and/or rotor position when the rotor is at standstill or turning at a relatively slow speed. These measurements can be used to control axial lift off as the rotor is brought up to operating speeds. Although the main embodiment of the invention has been explained in conjunction with a radially extended flange having opposed sensing surfaces, the flow circuits can be adapted to act against grooves formed in the rotor or any other suitable type surface capable of providing accurate back pressure readings. For example the bearing thrust faces on the rotor shaft could be extended beyond the hydrodynamic film area and simlarly used to accept the discharge from the flow circuits without effecting the bearing performance or being subjected to bearing defects. Although the sensing surfaces are shown in the main embodiment of the invention as being perpendicularly aligned in regard to the axis of the rotor, these surfaces can be inclined at a suitable angle with respect to the axis of the rotor without departing from the teachings of the invention. Furthermore the pilot valve can also be adapted to provide high pressure fluid directly to either side of a balancing piston which also acts upon the rotor to vary the axial load in either direction. To this end, the amplifier 69 as seen in Figs. 3 and 4 is modified by removing the piston rod 88 and connecting the piston directly to the rotor so that the piston exerts an axial pressure on the rotor in either direction.

A second embodiment of the invention is illustrated in Fig. 4 where like numbers depict like parts as those previously described in association with Figs. 1-3. In this embodiment of the invention, a single flow circuit 54 is employed to apply high pressure fluid to one side 41 of the rotating flange 40. The back pressure in the circuit is monitored by a pressure sensing line 66 that feeds pressure information to a measuring device 95 which is calibrated to convert the information into an electrical output signal indicative of the sensed pressure. The electrical signal is fed to a micro-processor that controls the opening and closing of an electrically operated control valve 96 in the bleed line 37 of the balancing system. The micro-processor is programmed to maintain the back pressure in the flow circuit a predetermined value that is indicative of a balanced condition.

While this invention has been described with specific reference to the details set forth above, it is not confined to

-13-

those details and the application is intended to cover any
modification or changes as may come within the scope of the
following claims.

I Claim

1. Apparatus for monitoring and balancing the axial load on the rotor assembly of a rotating machine that includes

an adjustable balancing means for applying a controlled axial force on the rotor assembly of a rotating machine to offset unbalancing forces acting on said rotor,

a flow circuit for applying a pressurized fluid against a surface on the rotor assembly whereby the back pressure in the circuit varies in response to variations in the axial load,

sensor means for determining the back pressure in said circuit, and

means responsive to the sensor means for automatically adjusting the balancing means to maintain the back pressure at said given value at which the axial load on the rotor assembly is balanced.

2. The apparatus of claim 1 wherein said means responsive to the sensor means is a microprocesser.

3. The apparatus of claim 2 wherein said balancing means includes a chamber containing a pressurized working fluid that acts against the rotor structure to apply an axially directed load thereagainst, and an electrically controlled valve operatively connected to the microprocessor to regulate the pressure in the chamber.

4. The apparatus of claim 1 further including means for adjusting the position of said flow circuit in reference to said surface on the rotor.

5. Apparatus for monitoring and balancing the axial load on the rotor assembly of a rotating machine that inlcudes

an adjustable balancing means for applying a controlled axial force on the rotor assembly of a rotating machine to offset unbalancing forces acting upon the rotor structure,

a pair of opposed surfaces on the rotor assembly,

a source of pressurized fluid that is at a given pressure level,

a first flow circuit for applying said pressurized fluid to one of the surfaces,

a second flow circuit for applying said pressurized fluid to the other of said surface,

locating means for positioning the flow circuit in relation to the opposing surface so that the same back pressure is produced in each circuit when the axial forces acting on the rotor assembly are balanced,

detecting means for sensing a difference in the back pressure in the two circuits indicating an unbalanced axial load on the rotor assembly,

control means responsive to the detecting means for adjusting the balancing means when an unbalanced condition is detected to apply an offsetting force on the rotor structure to balance the axial loading thereon.

-16-

6. The apparatus of claim 5 wherein said opposing surfaces are located on a radial flange extended on the rotor assembly.

7. The apparatus of claim 6 wherein the locating means includes a gaging block having a pair of radially disposed arms each of which is positioned adjacent to one of the opposing surfaces on the flange.

8. The apparatus of claim 5 wherein said balancing means includes a balancing chamber located in a stationary component of the machine adjacent a moving rotor component, means to deliver a pressurized substance into the chamber to apply a controllable balancing force on the rotor assembly and an adjustable control valve for regulating the rote flow of said substance into the chamber to control said balancing force.

9. The apparatus of claim 8 wherein said detecting means is a servo-amplifier that has a drive cylinder for regulating the control valve and a pilot valve connected to the flow circuits for controlling the drive cylinder in response to variation in the back pressure sensed in the two flow circuits.

-17-

10. A method of balancing the axial load on the rotor assembly of a rotating machine that includes the step of

applying a pressurized fluid from a pair of flow circuits to opposing surfaces on the rotor assembly of a rotating machine,

adjusting the position of the flow circuit in reference to the opposing surfaces so that the back pressure in each circuit is at the same value when the axial load on the rotor assembly is balanced,

monitoring the back pressure in both flow circuits to detect the occurrence of unequal pressures indicative of an unbalanced axial load, and

applying an offsetting axial force to the rotor assembly when an unbalanced condition is sensed to rebalance the axial load.

11. The method of claim 10 that includes the steps of providing the opposed surfaces on the end faces of a flange secured to the rotor assembly.

12. The method of claim 11 that includes the further step of mounting the discharge end of the flow circuits in a gage block and adjusting the gage block in reference to the flange to equalize the back pressure in the circuits.

FIG. 1

1/2

0252045

FIG. 2

FIG. 3

FIG. 4

RESERVOIR

MICRO-PROCESSOR